# EUROPEAN PATENT APPLICATION

(11) **EP 4 411 296 A1**
(43) Date of publication of application: **07.08.2024**
(21) Application number: 23020060.2
(22) Date of filing: 02.02.2023
(51) Int. Cl.: F25J 3/00

(54) **METHOD AND APPARATUS FOR PRODUCING A HYDROGEN FRACTION USING A SEPARATION FEED**

(71) Applicant: Linde GmbH, 82049 Pullach (DE)
(72) Inventor: Pham Duc, Tuat, 82049 Pullach (DE); Kurz, Benedikt, 82049 Pullach (DE); Höfel, Torben, 82049 Pullach (DE); von Trotha, Thilo Frank Theodor, 82049 Pullach (DE)
(74) Representative: Reuß, Stephanie

(57) **Abstract**

A method for producing a hydrogen fraction (N) containing at least 60% by volume hydrogen using a separation feed (A) is proposed, wherein the separation feed (A) comprises components of a first component group including methane and hydrogen and components of a second component group including hydrocarbons with two carbon atoms, wherein the separation feed (A) is subjected to a separation using a separation arrangement (100, 200) including a first separation section (110) and a second separation section (120), wherein the first separation section (110) is configured to perform a first partial condensation (E1) and a rectification (T1), wherein a first component mixture (B) and a second component mixture (C) are produced using the first separation section (110), wherein the first component mixture (B) and the second component mixture comprise a higher relative amount of the components of the first component group and a lower relative amount of the components of the second component group than the separation feed (A), and wherein the first component mixture (B) is produced at a first pressure level and the second component mixture (C) is produced at a second pressure level below the first pressure level. The second separation section (120) is configured to perform a compression (CN), a second partial condensation (E3, E4) and a counterstream absorption (T2), wherein the first component mixture (B) or a part thereof is submitted as a first absorption feed stream (D) to the counterstream absorption (T2) at the first pressure level, wherein the second component mixture (C) or a part thereof is used in forming a cyclic stream (E), wherein the cyclic stream (E) is cyclically subjected to the compression (CN) and the second partial condensation (E3, E4), wherein a side stream (F) is withdrawn from the cyclic stream (E) downstream of the second partial condensation (E3, E4), and wherein the side stream (F) or a part thereof is submitted as a second absorption feed stream (G) to the counterstream absorption (T2). Corresponding apparatus is also part of the present invention.

## Description

The present invention relates to a method and to an apparatus for producing a hydrogen fraction using a separation feed containing methane, hydrogen and one or more hydrocarbons with at least two carbon atoms.

### Background

Methods and apparatus for steam cracking hydrocarbons are known and are described, for example, in the article "Ethylene" in Ullmann's Encyclopedia of Industrial Chemistry, online since 15 Apr. 2007, DOI 10.1002/14356007.a10_045.pub2.

In steam cracking, a gas mixture, also referred to as cracked gas, is obtained which, after the separation of water and heavy components (including so-called pyrolysis oil), still essentially contains hydrogen, methane and hydrocarbons with two or more carbon atoms. Carbon monoxide, while not specifically mentioned hereinbelow, may also be a component. The cracked gas can be further separated in a variety of separation sequences which are known to the skilled person and which are also extensively described in literature. Particularly, a gas mixture essentially comprising methane and hydrogen, also referred to as tail gas, may be obtained therein. This tail gas is also referred to as a "light gas fraction" hereinbelow.

As generally known and e.g. discussed in US 10,464,810 B2, when steam cracking gaseous feedstocks such as ethane or ethane-rich gas mixtures ("gas cracking"), the tail gas may be significantly lower in methane than when steam cracking feedstocks containing higher hydrocarbons such as naphtha. Particularly, the tail gas may, in such cases, contain more than 60% or even more than 80% by volume of hydrogen.

As shown in Figure 1 of US 10,464,810 B2, illustrating a non-inventive process, in order to separate hydrocarbons with two or more carbon atoms components from lighter components of the tail gas, the cracked gas may be cooled in a cooling sequence with intermediate separation of condensates to such an extent that a non-condensable gas phase remains which is essentially free of the hydrocarbons with two or more carbon atoms and essentially contains hydrogen and methane.

To provide the refrigeration for the final cooling stage in such a non-inventive process, this tail gas may be expanded in an expander such as expander 104 shown in Figure 1 of US 10,464,810 B2, e.g. to a pressure of about 6 bar. To obtain pure hydrogen from such a tail gas, such as in a pressure swing adsorption 9 as explained in connection with the non-inventive process shown in Figure 1 of US 10,464,810 B2, it is necessary to recompress the tail gas in one or more compressor stages 106. A heating step 107 is generally performed before the recompression. As mentioned at several places in US 10,464,810 B2, the operation of the compressor stage(s) 106 in particular has proved decidedly energy consuming and also problematic for further reasons, such as in terms of the maintenance of the apparatus required.

A method and an apparatus as proposed in US 10,464,810 B2 is intended to address these problems. There is, however, a need for further improvements in the field of obtaining gas fractions from corresponding gas mixtures.

### Summary

According to the present invention, a method and an apparatus for producing a hydrogen fraction using a separation feed containing methane, hydrogen and one or more hydrocarbons with at least two carbon atoms is proposed. Preferred embodiments are the subject of the dependent claims and the description that follows.

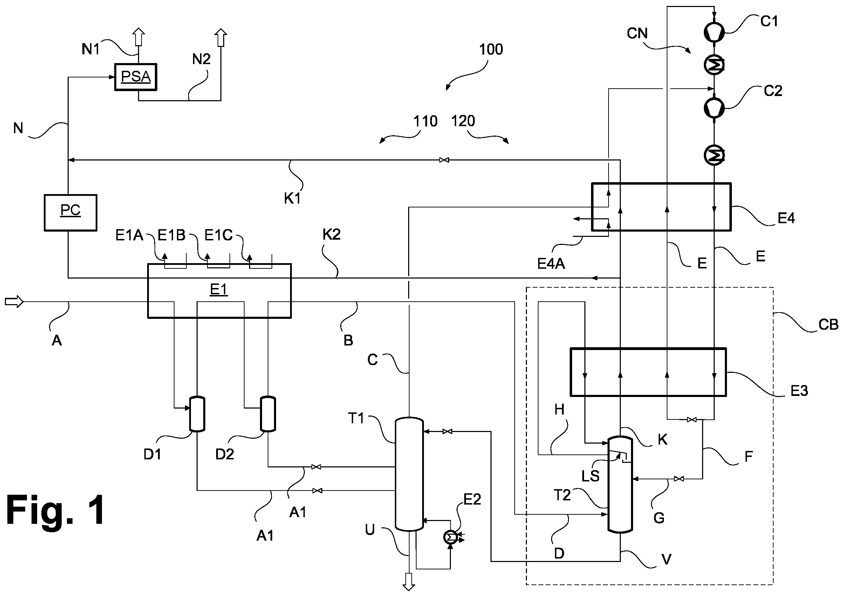

Embodiments of the present invention include features of a process as illustrated in Figure 1 which allows for obtaining a high pressure tail gas fraction essentially containing methane and hydrogen. This fraction may thereafter be separated to produce one or more hydrogen fractions and one or more methane fractions using, e.g., pressure swing absorption and/or membrane separation steps, if necessary. Further separation may be omitted if the purity of the fraction produced is already sufficient for the specific purposes.

Particularly membrane separation process, in case a further purification is necessary, may be cost intensive. Pressure swing absorption, on the other hand, generally produces, in the context relevant herein, only low pressure methane fractions with still considerable hydrogen content. For future gas cracker applications, however, it may be desirable to produce a relatively pure methane fraction at a relatively high pressure, particularly for utilizing the methane in downstream process such as methane reforming for the generation of synthesis gas and/or hydrogen.

Embodiments of the present invention provide advantageous solutions for this purpose as well. Embodiments of the present invention may advantageously be used to produce high pressure hydrogen-rich and/or methane-rich fractions. By providing additional process steps to generate colder temperatures, a methane-rich fraction (e.g. at more than 95% purity in a molar proportion) at a comparatively high pressure (e.g. 25 to 30 bar (abs.), such as about 29 bar (abs.)) and a hydrogen-rich fraction (e.g. at more than 98% purity in a molar proportion) at same high pressure or alternatively at a medium pressure (e.g. 10 to 15 bar (abs.), such as about 13 bar (abs.)) may be produced in embodiments of the present invention. Therefore, generally no further separation steps such as pressure swing adsorption or membrane separation is required, but such steps may nevertheless be provided.

Improvements proposed according to embodiments of the present invention may particularly include special treatment options for an overhead gas from a cryogenic counterflow absorption column essentially free of hydrocarbons with two or more hydrocarbons. Such an overhead gas, also referred as a "light component fraction" hereinbelow, is produced in embodiments of the present invention in a counterflow absorption as described below.

The overhead gas or light gas fraction is further cooled in several steps, for example two steps, so that the methane predominantly condenses out. The overhead gas may be cooled to just above the freezing point of methane, for example -178 °C. A refrigerant at very low pressure (e.g. 1.1 to 2 bar (abs.)), which may be produced in the process itself, may be used in this connection. This refrigerant may be superheated, if necessary, and refed into a fluid cycle providing cold to the process. A compressor or compressor stage may be used for this purpose and may be operated at a suitable outlet pressure (e.g. 4.7 bar (abs.)). The final cooling step for the overhead gas or light gas fraction is carried out with the aid of an expander, in which a gaseous remainder essentially consisting of hydrogen that may be obtained in the cooling steps is expanded (e.g. to 13 bar (abs.)) to produce further refrigeration. The condensates form a fraction essentially consisting of methane. This fraction can be fed to the plant boundary either with or without pumping without significant pressure reduction (or even pressure decrease). For this purpose, optional heating/vaporization may be performed in any of the heat exchangers present.

A hydrogen fraction may be the gaseous remainder just mentioned. Optionally, a hydrogen fraction of yet higher purity can be produced at a corresponding pressure bar a with the aid of a pressure swing adsorption. If a higher hydrogen pressure is required, this can be generated by means of compression upstream or downstream of the pressure swing adsorption. A tail gas of the pressure swing adsorption can be fed back into the process, for example at a suitable point upstream of a compressor used. Generally, the term "hydrogen fraction", as used herein, may be a gas mixture containing an amount of hydrogen of at least 60% by volume or more.

Compared to pressure swing adsorption and/or membrane processes, possibly with the aid of recompression(s) to produce a (high-pressure) methane fraction and hydrogen fraction, separation at cryogenic temperatures, as proposed herein, is a superior variant, especially if a fraction highly enriched in methane and poor in hydrogen is to be recovered at high pressure. Thermodynamically, less compressor power is required to achieve the same pressures and/or purities, and investment costs are still expected to be lower according to embodiments as proposed herein.

If only the generation of a fraction highly enriched in hydrogen is desired, the process proposed is likewise suitable. For a hydrogen concentration of, e.g., 98.5% on a molar basis, no pressure swing adsorption is required. If a higher hydrogen concentration is required, however, a pressure swing adsorption can optionally be used and the tail gas thereof can be reintroduced into the process, as mentioned. Due to the recirculation process, the hydrogen is almost completely recovered from the tail gas (maximum hydrogen recovery). If the methane fraction can also be recovered at lower pressures, this can still be used as an additional refrigerant. This will considerably reduce the required compression power.

According to the present invention, in other words, a method for producing a hydrogen fraction using a separation feed is proposed, wherein the separation feed comprises components of a first component group including methane and hydrogen and components of a second component group including hydrocarbons with two carbon atoms, wherein the separation feed is subjected to a separation using a separation arrangement including a first separation section and a second separation section, wherein the first separation section is configured to perform a first partial condensation and a rectification, wherein a first component mixture and a second component mixture are produced using the first separation section, wherein the first component mixture and the second component mixture comprise a higher relative amount of the components of the first component group and a lower relative amount of the components of the second component group than the separation feed, and wherein the first component mixture is produced at a first pressure level and the second component mixture is produced at a second pressure level below the first pressure level.

As proposed herein, the second separation section is configured to perform a compression, a second partial condensation and a counterstream absorption, wherein the first component mixture or a part thereof is submitted as a first absorption feed stream to the counterstream absorption at the first pressure level, wherein the second component mixture or a part thereof is used in forming a cyclic stream, wherein the cyclic stream is cyclically subjected to the compression and the second partial condensation, wherein a side stream is withdrawn from the cyclic stream downstream of the second partial condensation, and wherein the side stream or a part thereof is submitted as a second absorption feed stream to the counterstream absorption.

A method proposed according to the present invention, which may be implemented using an arrangement arrangement 100 according to Figure 1 and which is further explained in connection with this Figure below, avoids an expansion and recompression of a hydrogen fraction, as compared to an arrangement discussed at the outset in connection with the prior art, and this fraction can be recovered at full pressure of the cracked gas from a steamcracking unit, for example. In order to provide temperatures down to -150 °C, an open refrigeration cycle in the form of a fluid cycle is used. This has a number of advantages over the prior art in which a hydrogen compressor is used. The advantages include the use of a rather conventional turbo compressor instead of a sophisticated and/or expensive hydrogen compressor, that there is no need for an interference-sensitive expander/booster compressor, that separation of lighter components is implemented as a methane stripperand that there is generally a lower compression energy.

The term "essentially" as used herein is particularly intended to express that, in addition to the mentioned constituents, further constituents may be present in a certain composition, stream, etc., provided that the essential features of the composition, stream, etc. are not significantly changed thereby. For example, a stream "essentially consisting of hydrogen" may be suitable a desired purpose, such as for hydrogenation or hydrotreatment or use as a fuel, without any minor components or trace gases significantly affecting it quantitatively or reaction-wise. A mixture "essentially" containing or consisting of one or more components may, in particular, comprise these components at more than 95, 99, 99.9 or 99.99% in total or as individual values. Conversely, a gas mixture is "substantially free" of one or more components if it contains less than 5, 1, 0.1 or 0.01 % of these components in sum or as individual values. The percentages may refer to molar, quantitative or volumetric proportions.

In the language as used herein, the terms "pressure level" and "temperature level" are used to characterise pressures and temperatures, this being intended to express that such pressures and temperatures do not have to be exact pressure or temperature values. Pressures and temperatures of pressure and temperature levels may vary within certain ranges, e.g. ± 1%, 5%, 10%, 20% or even 50% about a mean or an average value. Pressure levels and temperature levels can lie in disjoint ranges or in ranges which overlap one another. In particular, pressure levels may also cover different pressures which result from inevitable pressure drops or pressure losses. This correspondingly also applies to temperature levels. Pressure levels indicated herein in bar values are absolute pressures (abs.) unless specified differently.

In the language as used herein, furthermore, liquid and gaseous mixtures are denoted as being rich or poor in one or more components, wherein "rich" can stand for a content of at least 50%, 75%, 90%, 95%, 99%, 99.5%, 99.9% or 99.99%, and "poor" can stand for a maximum content of 50%, 25%, 10%, 5%, 1%, 0.1% or 0.01% on a molar, weight or volume basis. If a mixture is characterized herein as comprising "predominantly" one or more components, the content in the one or more components may correspond to that as defined for the term "rich", and "rich", "predominantly" and "essentially" may be used as synonyms. Liquid and gaseous mixtures may be described as being "enriched" or "depleted" in one or more components, these terms relating to a corresponding content in of the one or more components in a starting mixture from which the liquid or gaseous mixture was obtained. The liquid or gaseous mixture is enriched when it contains at least the 1.1-fold, 1.5-fold, 2-fold, 5-fold, 10-fold, 100-fold or 1000-fold content, and it is depleted when it contains at most the 0.9-fold, 0.5-fold, 0.1-fold, 0.01-fold or 0.001-fold content of a corresponding component, with reference to the starting mixture. In the present case, e.g. when reference is made to "hydrogen" or "methane" or respectively to a "hydrogen fraction" or a "methane fraction", what should also be understood by this is a mixture which is rich in the corresponding component. However, this may also refer to the respective pure gas.

Any heat transfer steps or process according to the present invention may be performed using any suitable heat exchange equipment. Heat exchangers, heat exchanger units, heat exchanger subunits, etc., illustrated separately in specific examples of the present invention may be combined to combined units in any combination conceivable, and single heat exchangers may be substituted by any arrangements of separate heat exchangers, heat exchanger units, heat exchanger subunits, etc. Heat exchangers may be provided in any manner suitable. Particularly, such heat exchangers may be provided as plate-fin heat exchangers produced from a suitable material such as aluminium (PFHE, as referred to in ISO 15547-2:3005), such as are used in a variety of plants at a wide range of pressures and temperatures. Corresponding heat exchangers are used, for example, in the cryogenic separation of air, in the liquefaction of natural gas or in plants for the production of ethylene.

In embodiments of the present invention, the counterstream absorption may be performed using an absorption column, wherein the first absorption feed is introduced into the absorption column at a first feed position, and wherein the second absorption feed is introduced into the absorption column at a second feed position above the first feed position. This allows for a targeted treatment of these feeds depending on their particular contents of the first and second component groups.

Particularly, the second partial condensation may include, in embodiments of the present invention, cooling the cyclic stream or a part thereof to a temperature level of less than 100 °C at a high pressure level of e.g. 31 bar. In such an embodiment, a considerable condensation of methane and higher hydrocarbons may be realized, leaving a gaseous remainder essentially free from higher hydrocarbons.

In the counterstream absorption, a bottom liquid may be produced at the first pressure level in embodiments of the present invention, wherein the bottom liquid or a part therof may be depressurized to the second pressure level and used as a reflux in the rectification. Using a combination of separation units, in such a configuration, allows for providing a particularly effective separation.

A top gas is likewise produced using said counterstream absorption, and the top gas or a part thereof is subjected, in an embodiment of the present invention, to a third partial condensation generating a gaseous phase and a liquid phase, wherein the gaseous phase comprises a higher relative amount of the components of the first component group and a lower relative amount of the components of the second component group than the first absorption feed and the second absorption feed, wherein the gaseous phase or a part thereof is used as the, or used to form, the hydrogen fraction, and wherein the liquid phase or a part therof is used as a reflux in the counterstream absorption. Forming a hydrogen-rich gas fraction at a low temperature, as mentioned before, provides a number of advantages as compared to a high(er) temperature separation. Reference is made to the explanations above.

The gaseous phase or a part thereof may be used to form the hydrogen fraction, wherein a stream formed using the gaseous phase or a part thereof is subjected to a fourth partial condensation using a heat transfer process to produce one or more condensate fractions comprising a lower relative amount of hydrogen and a higher relative amount of methane than the gaseous phase, leaving an uncondensed remainder comprising a higher relative amount of hydrogen and a lower relative amount of methane than the gaseous phase. Such an embodiment includes a further purification of a hydrogen fraction in the low temperature section which may be performed in a substantially more economic and advantageous manner, as explained.

Embodiments of the present invention may include that the cyclic stream or a part thereof downstream of the second partial condensation is subjected to a phase separation, wherein a gas formed in the phase separation or a part thereof is used in forming the hydrogen fraction or the stream subjected to the fourth partial condensation feed. This allows producing a part of the hydrogen fraction and a liquid fraction including methane and higher hydrocarbons in an even more simplified manner. As explained hereinafter, part of the liquid fraction may advantageously used as a refrigerant and reintroduced into the refrigeration cycle.

In embodiments of the present invention, a liquid formed in the phase separation or the part thereof is used as the refrigerant in the heat transfer process used in the fourth partial condensation and is thereafter optionally recompressed and reintroduced into the cyclic stream.

The uncondensed remainder or a part thereof may be expanded and heated using the heat transfer process used in the fourth partial condensation. In embodiments of the present invention, the condensate fractions enriched in methane may be deprezzurized in order to be used more efficiently as refrigerant.

The heat transfer process used in the fourth partial condensation may include a first heat transfer step which is performed between a first temperature level of -135 °C and - 145 °C and a second temperature level of -150 °C to -165 °C and a second heat transfer step which is performed between the second temperature level and a third temperature level of -170 °C to -185 °C.

A remainder of the cyclic stream remaining after withdrawing the side stream to the absorption and optionally the refrigerant for the heat transfer process used in the fourth partial condensation therefrom may be decompressed, used as the refrigerant in the heat transfer process used in the secdound and/or third partial condensation, and thereafter recompressed in the compression.

The separation feed or a part thereof may be compressed to the first pressure level using one or more compressors provided separately to one or more compressors used for the compression of the above mentioned cyclic stream.

An apparatus for producing a hydrogen fraction containing at least 60% by volume hydrogen using a separation feed is likewise part of the present invention, wherein the separation feed comprises components of a first component group including methane and hydrogen and components of a second component group including hydrocarbons with two carbon atoms, wherein the apparatus is configured to subject the separation feed to a separation using a separation arrangement including a first separation section and a second separation section, wherein the first separation section is configured to perform a first partial condensation and a rectification, wherein a first component mixture and a second component mixture are produced using the first separation section, wherein the first component mixture and the second component mixture comprise a higher relative amount of the components of the first component group and a lower relative amount of the components of the second component group than the separation feed, and wherein the apparatus is configured to produce the first component mixture at a first pressure level and the second component mixture at a second pressure level below the first pressure level.

As proposed herein, the second separation section is configured to perform a compression, a second partial condensation and a counterstream absorption, wherein the apparatus is configured to submit the first component mixture or a part thereof as a first absorption feed stream to the counterstream absorption at the first pressure level, to use the second component mixture or a part thereof in forming a cyclic stream, to cyclically subject the cyclic stream to the compression and the second partial condensation, to withdraw a side stream from the cyclic stream downstream of the second partial condensation, and to submit the side stream or a part thereof as a second absorption feed stream to the counterstream absorption.

As to further features and advantages of an inventive arrangement and its possible embodiments, particular reference is made to the description of the method according to the present invention and its embodiments as described before. An arrangement according to the present invention is particularly adapted to perform a corresponding method or an embodiment thereof.

The present invention will further be described with reference to the appended drawing illustrating an embodiment of the present invention.

### Brief description of the drawings

Figure 1 schematically illustrates an arrangement for producing a hydrogen fraction from a separation feed according to an embodiment of the present invention.
Figure 2 schematically illustrates an arrangement for producing a hydrogen fraction from a separation feed according to an embodiment of the present invention.
Figure 3 schematically illustrates details of an arrangement for producing a hydrogen fraction from a separation feed according to an embodiment of the present invention.

### Detailed description

In the Figures, elements of identical, essentially identical, functionally comparable, or technically compatible function and/or purpose and/or construction may be identified with identical reference numerals, and repeated explanations may be omitted for reasons of conciseness. Explanations herein relating to devices, apparatus, arrangements, systems, etc., according to embodiments of the present invention likewise may apply to methods, processes, procedures, etc. according to embodiments of the present invention and vice versa.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc., other than those specifically described herein. In addition, this disclosure may include other inventions not presently claimed, but which may be claimed in future, particularly when encompassed by the scope of the independent claims.

Figure 1 schematically illustrates an arrangement 100 for producing a hydrogen fraction N with a hydrogen content indicated above from a separation feed A according to an embodiment of the present invention.

Separation feed A, which comprises components of a first or component group including methane and hydrogen and components of a second component group including hydrocarbons with two carbon atoms, more particularly ethane and ethylene, may be obtained from a steam cracking process including a "warm" separation section and a so-called deethanizer in which separation feed A is separated from heavier hydrocarbons. Alternatively, the Deethanizer is located downstream arrangement 100. In that case, separation feed A still contains hydrocarbons with two carbon atoms as well as hydrocarbons with three or more carbon atomes. Separation feed A may particularly be free, or essentially free, from acetylene and an acetylene hydrogenation step may be included in a process for forming separation feed A. Separation feed A may be essentially free from hydrocarbons with three and more carbon atoms and may contain a proportion of carbon monoxide in the first component group.

The separation feed A is subjected to a separation in the separation arrangement 100 which comprises a first separation section 110 and a second separation section 120. The the first separation section 110 is configured to perform a first partial condensation E1 and a rectification T1. Any reference to a separation step or apparatus belonging to any one of the first separation section 110 and the second separation section 120 is not intended to limit the scope of the present invention and is given here only for clarity and reasons of simplified reference.

A heat exchanger which is used in said partial condensation may also be referred to with E1, and at other places herein apparatus may likewise be referred to with the same reference numerals as method steps performed thereby.

Heat exchanger E1 may be adapted to use a hydrocarbon refrigerant with two carbon atoms at three different pressure and temperature levels, such as, in descending order, about -57 °C, -80 °C and -100 °C, as generally known from the prior art cited at the outset. Streams of corresponding refrigerants are indicated with E1A, E1B and E1C. Condensates A1 and A2 may be separated from a remaining gas phase in separation vessels D1 and D2, and these condensates may be expanded to a rectification column T1 adapted to perform rectification T1. Said rectification T1 may also be referred to as "stripping" as it includes a step of evaporating components of the first component group, and the rectification column may be referred as a "stripper column T1" for the same reason. Alternatively, the column is equipped with a dedicated condenser to further reduce the concentration of molecules with two or more carbon atoms in the column overhead (not shown in Fig. 1).

Rectification column T1 may be adapted to operate at a pressure level of e.g. 10 to 15 bar (abs.), such as about 12 bar (abs.). Rectification column T1 may be operated with an evaporator E2 which may be adapted to be heated with a hydrocarbon "refrigerant" stream as well, which is not specifically indicated. From the lower part or a sump of rectification column T1, a liquid fraction U essentially comprising or consisting of the one or more hydrocarbons with at least two carbon atoms or, as the case may be, ethane and ethylene, and essentially free from methane and hydrogen may be withdrawn. The liquid fraction U may be passed on to further separation steps such as a so-called C2 splitter in order to obtain an ethane fraction and an ethylene fraction.

From an upper part of rectification column T1, a top gas or stripper offgas C may be withdrawn. Top gas C, which is referred to as a "second" component mixture at other places herein, is particularly enriched in methane and hydrogen and depleted in the one or more hydrocarbons with at least two carbon atoms as compared to the separation feed A, but still contains a significant amount of the one or more hydrocarbons with at least two carbon atoms. Top gas C may be provided at a temperature level of about -89 °C and at a pressure depending on the operating pressure of the stripper column T1, e.g. at 12 bar (abs.).

A gaseous remainder B of the initial partial condensation E1 using heat exchanger E1, which likewise is particularly enriched in methane and hydrogen and depleted in the one or more hydrocarbons with at least two carbon atoms as compared to the separation feed A, but still contains a significant amount of the one or more hydrocarbons with at least two carbon atoms, may be provided at a temperature level of about -98 °C. This gaseous remainder B, which is referred to as a "first" component mixture at other places herein, and the top gas C, are further treated in the second separation section 120 which includes apparatus enclosed in a cold box CB additionally indicated by a dashed line. The second separation section 120 is configured to perform a compression CN, a second partial condensation E3, E4 and a counterstream absorption T2. A compressor arrangement CN is provided for said compression which, in the example illustrated, may include one or more first compressors or compressor stages C1 and one or more second compressor or compressor stages C2. An absorption column T2 may be provided for said counterstream absorption and heat exchangers E3 and E4 may be provided for the second partial condensation E3, E4 in second separation section 120. However, any kind of heat transfer equipment may be present, and instead of separate heat exchangers E3 and E4, a single heat exchanger or a different arrangement of two or more heat exchangers may be used without deviating from the scope of the invention.

As just explained, and just repeated in other words, in arrangement 100 a first component mixture B (uncondensed remainder after first partial condensation E1) and a second component mixture C (top gas from rectification T2) produced using the first separation section 110, wherein the first component mixture B and the second component mixture comprise a higher relative amount of the components of the first component group and a lower relative amount of the components of the second component group than the separation feed A, and wherein the first component mixture B is produced at a first pressure level and the second component mixture C is produced at a second pressure level below the first pressure level. Said relative amounts may be different in the first and second component mixtures B, C.

The first component mixture B, i.e. the gaseous remainder after first partial condensation E1, may, essentially at the same pressure level it is produced, be passed to a lower region of absorption column T2 or, in other words, the first component mixture B is be passed as a first absorption feed stream D to the counterstream absorption T2 at the first pressure level.

The second component mixture C, i.e. the top gas from rectification T1, is passed to a fluid cycle E including, in the order indicated, and in the specific example shown, the compression CN including a first compression step in compressor(s) or compressor stage(s) C1, a second compression step in compressor(s) or compressor stage(s) C2 (each being equipped with an aftercooler), cooling in heat exchanger E4, cooling in the heat exchanger E3, an expansion in a valve not specifically indicated, heating in the heat exchanger E3 and thereafter heating in the heat exchanger E4 before being recompressed in compressor(s) or compressor stage(s) C1, closing the fluid cycle E. In heat exchangers E3 and the corresponding heat transfer steps, a partial condensation of the fluid cycle E, referred to as "second partial condensation" at other places herein, is performed. The second component mixture is introduced into the fluid cycle between compressor(s) or compressor stage(s) C1 and compressor(s) or compressor stage(s) C2, but the present invention is not limited to this specific embodiment and arrangement.

Again in more general terminology, the second component mixture C is used in forming a cyclic stream E, wherein the cyclic stream E is cyclically subjected to the compression CN and the second partial condensation E3, E4 (including, and supplemented by, the steps mentioned).

Between said cooling in the heat exchanger E3 and the expansion, at which the fluid of the fluid cycle E may be present at a pressure level of about 31 bar and a temperature level of about -142, a fluid stream F may be withdrawn from the cycle stream E and sent to absorption column T2, similarly to first absorption feed stream D mentioned before, for which reason stream F is also referred to as a "second" absorption feed G stream at other places herein. In that context, the pressure level of fluid stream F only requires a slightly higher pressure than the first pressure level, at which absorption column T2 is operated in order to allow routing to the column without pump. The expansion of the rest of cycle stream E after withdrawal of side stream F to about 5 bar (abs.) may result in a temperature decrease to about -153 °C, allowing the stream to be used as refrigerant in exchanger E3 and E4. A temperature level of stream E between heat exchanger E3 and heat exchanger E4 may be about -101 °C and stream E may be heated in heat exchanger E4 to about 25 °C. Stream E may be recycled to compressor(s) or compressor stage(s) C1 at a pressure level of about 4.7 bar (abs.). Second component mixture C may be heated in heat exchanger E4 to a temperature level of about 25 °C. Heat exchanger E4 may utilize a refrigerant stream comprising hydrocarbons with two carbon atoms at about -100 °C as indicated with a stream E4A.

A stream V withdrawn from a sump of absorption column T2 at a temperature level of about -106 °C and a pressure level of about 29 bar (abs.) may be passed back to rectification column T1. More precisely, a bottom liquid V is produced at the first pressure level using said counterstream absorption T2, and the bottom liquid V is depressurized to the second pressure level, in the example shown, and used as a reflux in the rectification T1.

A gas stream H from the top of an absorption section of absorption column T2, i.e. from below a liquid seal LS, may be partly condensed in heat exchanger E3 to form a liquid reflux to absorption column T2. This partial condensation is referred to as a "third partial condensation" E3 at other places herein and may in actual fact be performed using any, any part, or any subset of heat exchanger equipment provided herein, or additional heat exchanger equipment, as the case may be. In the embodiment shown in Figure 1, this gaseous phase K is heated in parts indicated with K1 and K2 in heat exchangers E1, E3 and E4. A part K2 heated in heat exchanger E1 after being heated in heat exchanger E3 may be used as cold stream to be heated in a precooling step PC before being recombined with the other part K1 which has been heated in heat exchangers E3 and E4. Relative amounts of parts K1 and K2 may be adjusted as needed. The liquid phase is not specifically indicated in Figure 1, as it is represented by liquid collecting at liquid seal LS and may be distributed to the lower parts of absorption column T2 from there. However, other arrangements including, e.g. separate top condensers may be used in alternative embodiments without deviating from the scope of the present invention.

Again, in other words, a top gas H is produced using said counterstream absorption T2, wherein the top gas H is subjected to a third partial condensation E3 generating a gaseous phase K and a liquid phase, wherein the gaseous phase K comprises a higher relative amount of the components of the first component group and a lower relative amount of the components of the second component group than the first absorption feed D and the second absorption feed F/G, wherein the gaseous phase K or a part thereof is used to form hydrogen fraction N further explained below, and wherein the liquid phase or a part therof is used as a reflux in the counterstream absorption T2.

The gas phase K may be heated in heat exchanger E3 before being split into partial streams K1 and K2. Partial stream K2 is further heated in heat exchanger E1 while partial stream K1 is further heated in heat exchanger E4. After a precooling step PC to which partial stream K2 is subjected, partial streams K1 and K2 may be recombined and a stream N, which may be the hydrogen fraction already mentioned, may be formed accordingly. This hydrogen fraction N may, if needed, be subjected, at a temperature level of about 23 °C and a pressure level of about 29 bar (abs.) to a pressure swing adsorption step PSA, forming a hydrogen fraction N1 and a tail gas fraction N2. Alternatively, a membrane separation step to form a high pressure methane fraction and a low pressure hydrogen fraction may be used, or any other suitable separation process at appropriate conditions.

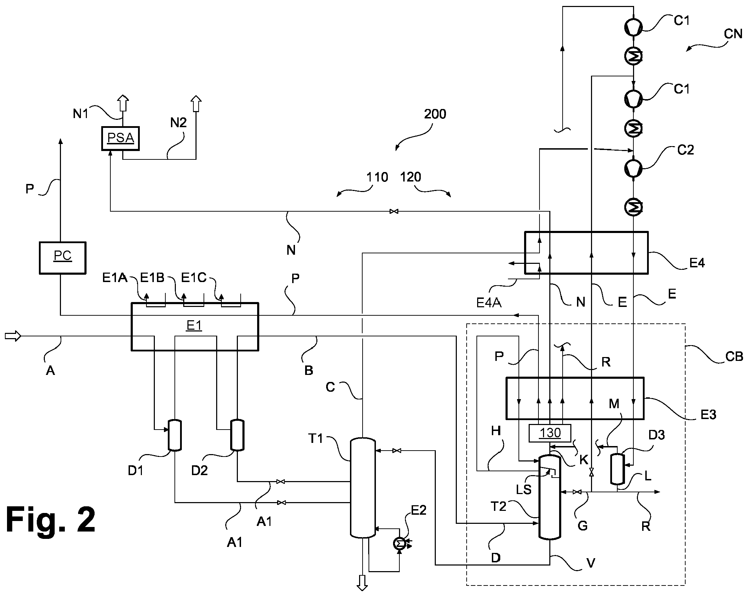

Figure 2 schematically illustrates an arrangement 200 for producing a hydrogen fraction from a separation feed according to an embodiment of the present invention.

As illustrated in Figure 2 for arrangement 200, the fluid cycle including cycle stream E is configured differently in that after the cooling of cycle stream E in heat exchanger E3 already explained in connection with Figure 1 at this place, a phase separation is performed using a separation vessel D3. A gas phase M and a liquid phase L are formed in this phase separation in vessel D3, wherein the gas phase M is united with the gas phase K at the top of the absorption column T2 and together therewith treated in a treatment unit 130 as explained below.

The liquid phase L is, in a first part, used as absorption feed G, in a second part used as a refrigerant R (as explained below) and in a third part expanded and refed into the cycle, i.e., used in forming cyclic stream E.

In treatment unit 130, a stream P essentially consisting of methane at a pressure of about 29 bar, a stream N essentially consisting of hydrogen at a pressure of about 13 bar, which may be the hydrogen fraction N explained above, and an evaporated refrigerant stream R whose formation was already explained above are withdrawn. Stream P may e.g. contain, in molar proportions, 96.8% methane, 2.8% hydrogen, 0.3% ethylene and 0.1% carbon monoxide. Stream N may e.g. contain, in molar proportions, 98.5% hydrogen, 1.4% methane and 0.1% carbon monoxide. Particularly stream N may therefore be used directly as a hydrogen fraction N without a need for further treatment after heating in heat exchangers E3 and E4. If needed, however, it may also be subjected to a pressure swing adsorption PSA after heating in heat exchangers E3 and E4 as explained above.

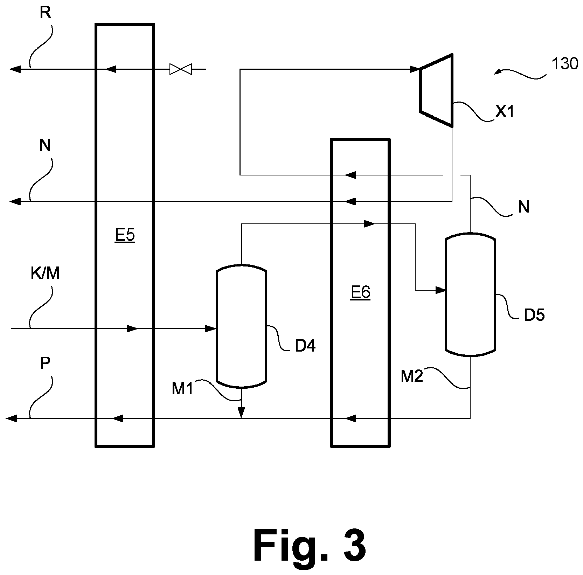

Figure 3 schematically illustrates details of a process for producing a hydrogen fraction from a separation feed according to an embodiment of the present invention, and particularly of the treatment unit 130 shown in Figure 2.

As illustrated, the gas phase K being essentially free from the one or more hydrocarbons with at least two carbon atoms, supplemented with the gas phase M having a like composition, is cooled using a heat transfer process using heat exchangers E5 and E6 to produce one or more condensate fractions enriched in methane and depleted in hydrogen as compared to the light component fraction, and leaving an uncondensed remainder depleted in methane and enriched in hydrogen as compared to the light gas fraction. In the specific example of treatment unit 130 illustrated in Figure 3, the heat transfer process using said heat exchangers E5, E6 includes a first heat transfer step using heat exchanger E5 and a second heat transfer step using heat exchanger E6, wherein said cooling the gas phase K/M includes cooling in the first heat transfer step using heat exchanger E5 to form a first one of the condensate fractions indicated M1 in a vessel D4 and cooling in the second heat transfer step in heat exchanger E6 to form a second one of the condensates indicated M2 in a vessel D5. The condensate M2 is heated in heat exchanger E6, thereafter combined with condensate M1, and heated in heat exchanger E5. A separate treatment is likewise possible, and stream P already referred to above, containing essentially methane, is formed accordingly.

The uncondensed remainder, which is essentially stream N, i.e. a stream essentially consisting of hydrogen, is a gaseous remainder remaining downstream of the second heat transfer step in heat exchanger E6, in the specific example illustrated, and this uncondensed remainder is expanded using an expander X1 and heated using the heat transfer process using heat exchangers E5, E6. More specifically, said expanding and heating the uncondensed remainder N includes heating in the second heat transfer step using heat exchanger E6, thereafter expanding in expander X1, thereafter heating in the second heat transfer step using heat exchanger E6 (again) and thereafter heating in the first heat transfer step using heat exchanger E5.

Stream R, which is a part of a liquid from vessel D3 as illustrated in Figure 2, is expanded and used as refrigerant as shown. It may thereafter be heated in heat exchangers E3 and E4 and may be recompressed using a further compressor C3 before being reintroduced in the fluid cycle explained several times before.

Depending on the specific requirements regarding pressure and hydrogen concentration of hydrogen stream N, the final condensation step E6 may or may not be included. In this final step, the hydrogen concentration in stream N is maximized at the expense of deprezzurization.

Likewise, depending on pressure requirement of methane stream P, condensates M1 and M2 may or may not be deprezzurized in order to be used more effectively as refrigerants at low temperature level.

## Claims

1. A method for producing a hydrogen fraction (N) containing at least 60% by volume hydrogen using a separation feed (A), wherein the separation feed (A) comprises components of a first component group including methane and hydrogen and components of a second component group including hydrocarbons with two carbon atoms, wherein the separation feed (A) is subjected to a separation using a separation arrangement (100, 200) including a first separation section (110) and a second separation section (120), wherein the first separation section (110) is configured to perform a first partial condensation (E1) and a rectification (T1), wherein a first component mixture (B) and a second component mixture (C) are produced using the first separation section (110), wherein the first component mixture (B) and the second component mixture comprise a higher relative amount of the components of the first component group and a lower relative amount of the components of the second component group than the separation feed (A), and wherein the first component mixture (B) is produced at a first pressure level and the second component mixture (C) is produced at a second pressure level below the first pressure level, **characterized in that** the second separation section (120) is configured to perform a compression (CN), a second partial condensation (E3, E4) and a counterstream absorption (T2), wherein the first component mixture (B) or a part thereof is submitted as a first absorption feed stream (D) to the counterstream absorption (T2) at the first pressure level, wherein the second component mixture (C) or a part thereof is used in forming a cyclic stream (E), wherein the cyclic stream (E) is cyclically subjected to the compression (CN) and the second partial condensation (E3, E4), wherein a side stream (F/G) is withdrawn from the cyclic stream (E) downstream of the second partial condensation (E3, E4), and wherein the side stream (F) or a part thereof is submitted as a second absorption feed stream (G) to the counterstream absorption (T2).

2. The method according to claim 1, wherein the counterstream absorption (T2) is performed using an absorption column, wherein the first absorption feed (D) is introduced into the absorption column at a first feed position, and wherein the second absorption feed (G) is introduced into the absorption column at a second feed position above the first feed position.

3. The method according to claim 1 or claim 2, wherein the second partial condensation (E3, E4) includes cooling the cyclic stream (E) or a part thereof to a temperature level of less than 100 °C.

4. The method according to any of the preceding claims, wherein a bottom liquid (V) is produced at the first pressure level using said counterstream absorption (T2), and wherein the bottom liquid (V) or a part therof is depressurized to the second pressure level and used as a reflux in the rectification (T1).

5. The method according to any one of the preceding claims, wherein a top gas (H) is produced using said counterstream absorption (T2), wherein the top gas (H) or a part thereof is subjected to a third partial condensation (E3) generating a gaseous phase (K) and a liquid phase, wherein the gaseous phase (K) comprises a higher relative amount of the components of the first component group and a lower relative amount of the components of the second component group than the first absorption feed (D) and the second absorption feed (F), wherein the gaseous phase (K) or a part thereof is used as the, or used to form, the hydrogen fraction (N), and wherein the liquid phase or a part therof is used as a reflux in the counterstream absorption (T2).

6. The method according to claim 5, wherein the gaseous phase (K) or a part thereof is used to form the hydrogen fraction (N), wherein a stream (K/M) formed using the gaseous phase (K) or a part thereof is subjected to a fourth partial condensation (E5, E6) using a heat transfer process to produce one or more condensate fractions (M1, M2) comprising a lower relative amount of hydrogen and a higher relative amount of methane than the gaseous phase (K), leaving an uncondensed remainder comprising a higher relative amount of hydrogen and a lower relative amount of methane than the gaseous phase (K).

7. The method according to claim 5, wherein the cyclic stream (E) or a part thereof downstream of the second partial condensation (E3, E4) is subjected to a phase separation, wherein a gas (M) formed in the phase separation or a part thereof is used in forming the hydrogen fraction (N) or the stream (K/M) subjected to the fourth partial condensation (E5, E6).

8. The method according to claim 7, wherein a liquid (L) formed in the phase separation or the part thereof is used as the refrigerant (R) in the heat transfer process used in the fourth partial condensation (E5, E6) and is thereafter optionally recompressed (C3) and reintroduced into the cyclic stream (E).

9. The method according to any one of claims 5 to 8, wherein the uncondensed remainder or a part thereof is expanded and heated using the heat transfer process used in the fourth partial condensation (E5, E6).

10. The method according to any one of claims 5 to 9, wherein the condensate fractions enriched in methane (M1, M2) are deprezzurized in order to be used more efficiently as (additional) refrigerant in E5 and/or E6

11. The method according to any one of claims 6 to 10, wherein the heat heat transfer process used in the fourth partial condensation (E5, E6) includes a first heat transfer step (E5) which is performed between a first temperature level of -135 °C and -145 °C and a second temperature level of -150 °C to -165 °C and a second heat transfer step (E6) which is performed between the second temperature level and a third temperature level of -170 °C to -185 °C.

12. The method according to any one of the preceding claims, wherein a remainder of the cyclic stream (E) remaining after withdrawing the side stream (F/G) therefrom is decompressed, used as the refrigerant in the heat transfer process used in the secdound and/or third partial condensation (E3), and thereafter recompressed in the compression (CN).

13. The method according to any one of the preceding claims, wherein the separation feed (A) or a part thereof is compressed to the first pressure level using one or more compressors provided separately to one or more compressors used for the compression (CN) of the cyclic stream (E).

14. An apparatus for producing a hydrogen fraction (N) containing at least 60% by volume hydrogen using a separation feed (A), wherein the separation feed (A) comprises components of a first component group including methane and hydrogen and components of a second component group including hydrocarbons with two carbon atoms, wherein the apparatus is configured to subject the separation feed (A) to a separation using a separation arrangement (100, 200) including a first separation section (110) and a second separation section (120), wherein the first separation section (110) is configured to perform a first partial condensation (E1) and a rectification (T1), wherein a first component mixture (B) and a second component mixture (C) are produced using the first separation section (110), wherein the first component mixture (B) and the second component mixture comprise a higher relative amount of the components of the first component group and a lower relative amount of the components of the second component group than the separation feed (A), and wherein the apparatus is configured to produce the first component mixture (B) at a first pressure level and the second component mixture (C) at a second pressure level below the first pressure level, **characterized in that** the second separation section (120) is configured to perform a compression (CN), a second partial condensation (E3, E4) and a counterstream absorption (T2), wherein the apparatus is configured to submit the first component mixture (B) or a part thereof as a first absorption feed stream (D) to the counterstream absorption (T2) at the first pressure level, to use the second component mixture (C) or a part thereof in forming a cyclic stream (E), to cyclically subject the cyclic stream (E) to the compression (CN) and the second partial condensation (E3, E4), to withdraw a side stream (F) from the cyclic stream (E) downstream of the second partial condensation (E3, E4), and to submit the side stream (F) or a part thereof as a second absorption feed stream (G) to the counterstream absorption (T2).
